# EUROPEAN PATENT SPECIFICATION

(11) **EP 2 532 862 B1**
(45) Date of publication and mention of the grant of the patent: **18.07.2018**
(21) Application number: 11739551.7
(22) Date of filing: 02.02.2011
(51) Int. Cl.: F02D 19/12, F02B 47/02, F02D 19/06, F02D 45/00, F02M 25/022

(54) **FUEL SUPPLY DEVICE WITH FUEL SWITCHOVER FUNCTION**
KRAFTSTOFFZUFUHRVORRICHTUNG MIT KRAFTSTOFFUMSCHALTFUNKTION
DISPOSITIF D'ALIMENTATION EN CARBURANT AYANT UNE FONCTION DE COMMUTATION DE CARBURANT

(30) Priority: 03.02.2010 JP 2010022317
(43) Date of publication of application: 12.12.2012
(73) Proprietor: Kawasaki Jukogyo Kabushiki Kaisha, Kobe-shi, Hyogo 650-8670 (JP)
(72) Inventor: TOYODA, Takeshi, HYOGO 650-8670 (JP); KAKAMU, Koki, HYOGO 650-8670 (JP)
(74) Representative: Leinweber & Zimmermann
(86) International application number: PCT/JP2011/000564
(87) International publication number: WO 2011/096202

(56) References cited:
- DE-A1- 19 747 240
- JP-A- S5 933 392
- JP-A- 59 033 392
- JP-A- 2000 199 464
- JP-A- 2000 199 464
- JP-A- 2002 168 154
- JP-A- 2006 009 631
- JP-A- 2006 009 631

## Description

### Technical Field

The present invention relates to a fuel supply apparatus with a fuel switching function, the fuel supply apparatus being capable of, in a desired scene such as start or stop of a diesel engine, producing and using a fuel suitable for such a scene by selecting predetermined materials among plural types of fuel oil, water, and additives and also capable of supplying such a fuel to the diesel engine in such a desired scene.

### Background Art

As one technology for reducing NO_{X} in an exhaust gas of an internal combustion engine, there is a water-emulsion fuel obtained by mixing and stirring fuel oil and water. It is generally confirmed that the NO_{X} in the exhaust gas can be reduced by using the water-emulsion fuel as the fuel of the internal combustion engine. The water-emulsion fuel is also applicable to marine diesel engines.

In the marine diesel engines, Bunker C can be used as the fuel oil. In the case of using the water-emulsion fuel, Bunker C can be used as the fuel oil that is a base of the water-emulsion fuel.

It should be noted that the water-emulsion fuel using Bunker C as its base (Bunker C emulsion) is extremely high in viscosity. Therefore, in order to supply this water-emulsion fuel to the diesel engine, the viscosity of the water-emulsion fuel needs to be lowered by heating the water-emulsion fuel to 100°C or higher.

However, in the case of stopping the marine diesel engine for a long period of time, Bunker C and water in the Bunker C emulsion in the diesel engine and a fuel supply system separate from each other. If such a fuel is used, the diesel engine is adversely affected.

Here, for example, PTL 1 discloses a fuel supply apparatus with a fuel switching function, the fuel supply apparatus being capable of supplying an emulsion fuel to the diesel engine when stopping the marine diesel engine for a long period of time or starting the diesel engine, the emulsion fuel being obtained by mixing Bunker C and Bunker A having low viscosity and also capable of supplying the Bunker C emulsion to the diesel engine when a load applied to the diesel engine has reached a certain load or higher.

According to this conventional fuel supply apparatus with the fuel switching function, when stopping or starting the diesel engine, the diesel engine can be driven by supplying to the diesel engine a Bunker A and C emulsion (emulsion fuel not containing water) obtained by mixing Bunker A and Bunker C. When the fuel consumption of the diesel engine has reached a predetermined amount or more, the diesel engine can be driven by supplying to the diesel engine the Bunker C emulsion instead of the Bunker A and C emulsion, the Bunker C emulsion being obtained by mixing Bunker C and water.

With this, when starting the marine diesel engine after the marine diesel engine is stopped for a long period of time, the Bunker A and C emulsion in the diesel engine and the like does not adversely affect the diesel engine and the like, and the diesel engine can be driven appropriately.

PTL 2 discloses a fuel supply apparatus according to the precharacterizing clause of new claim 1.

### Citation list

### Patent literature

PTL 1: Japanese laid-open patent application publication number 59-33392
PTL 2: DE 197 47 240 A1

### Summary of the invention

### Technical problem

According to the above conventional fuel supply apparatus with the fuel switching function, switching from the Bunker A and C emulsion obtained by mixing Bunker A and Bunker C to the Bunker C emulsion obtained by mixing Bunker C and water can be automatically performed when the fuel consumption of the diesel engine has reached a predetermined amount or more. However, the problem is that the execution of the switching to the Bunker C emulsion is not determined after whether or not Bunker A remains in the diesel engine and its fuel supply system has been examined.

Therefore, if the Bunker C emulsion obtained by mixing Bunker C and water is supplied to the fuel supply system and the like with Bunker A remaining in the fuel supply system and the like (with the Bunker A and C emulsion remaining in the fuel supply system and the like, the Bunker A and C emulsion being obtained by mixing Bunker A and Bunker C), a water-emulsion fuel containing Bunker A, Bunker C, and water and having unstable properties is supplied to the diesel engine, the fuel supply system, and the like, and this causes a possibility that unexpected damages occur on the diesel engine and its fuel supply system. To be specific, this is because it is difficult to maintain a state where water uniformly disperses in Bunker A, having higher specific gravity than water, in a certain period of time or more without, for example, an additive, such as a surfactant.

The present invention was made to solve the above problems, and an object of the present invention is to provide a fuel supply apparatus with a fuel switching function, the fuel supply apparatus being capable of determining by a determining portion whether the fuel oil supplied to the diesel engine is first fuel oil (Bunker A, for example) or second fuel oil (Bunker C, for example) and supplying an appropriate water-emulsion fuel or fuel to the diesel engine based on the result of the determination by the determining portion.

### Solution to Problem

A fuel supply apparatus with a fuel switching function according to a first aspect of the present invention is a fuel supply apparatus configured to switch a supply passage switching portion such that one of first fuel oil and second fuel oil used to produce water-emulsion fuel containing fuel oil and water is supplied to a diesel engine, the fuel supply apparatus including a determining portion configured to determine whether the fuel oil supplied to the diesel engine is the first fuel oil or the second fuel oil.

According to the fuel supply apparatus with the fuel switching function of the first aspect of the present invention, for example, in a case where the second fuel emulsion (Bunker C emulsion) containing the second fuel oil (Bunker C) and the water is produced and supplied to the diesel engine, and the determining portion has determined that the fuel oil supplied to the diesel engine is the second fuel oil (Bunker C) in a state where the supply passage switching portion is switched such that the second fuel oil (Bunker C) is supplied to the diesel engine, the second fuel emulsion can be produced by supplying the water to the second fuel oil (Bunker C) and then can be supplied to the diesel engine.

Then, when the determining portion has determined that the fuel oil supplied to the diesel engine is, for example, the first fuel oil (Bunker A), the supply of the water is not performed until the determining portion determines that the fuel oil supplied to the diesel engine is the second fuel oil (Bunker C). When the determining portion has determined that the fuel oil supplied to the diesel engine is the second fuel oil (Bunker C), the second fuel emulsion (Bunker C emulsion) can be produced by supplying the water to the second fuel oil (Bunker C) and then can be supplied to the diesel engine.

The reason why the water is not supplied to the first fuel oil when the determining portion has determined that the fuel oil supplied to the diesel engine is the first fuel oil (Bunker A) is because there is a possibility that unexpected damages occur on the diesel engine and the fuel supply system if the first fuel oil and the water are mixed with each other and the obtained unstable water-emulsion fuel not containing an additive is supplied to the diesel engine.

In the fuel supply apparatus with the fuel switching function according to the first aspect of the present invention, when the determining portion has determined that the fuel oil supplied to the diesel engine is the first fuel oil, a supply method output portion may output a first emulsion signal indicating that the water and an additive should be mixed in the first fuel oil.

With this, in a case where the first fuel oil (Bunker A, for example) is such a fuel oil that can be used as the first fuel emulsion by being mixed with the water and the additive, and when the determining portion has determined that the fuel oil supplied to the diesel engine is the first fuel oil, the supply method output portion can output a first emulsion signal indicating that the water and the additive should be mixed with the first fuel oil. Then, for example, the first emulsion signal causes the display portion to display that the water and the additive should be mixed with the first fuel oil. With this, the operator can see the display and perform the operation of mixing the water and the additive with the first fuel oil, and the first fuel emulsion produced by mixing the water and the additive in the first fuel oil can be surely supplied to the diesel engine. Moreover, the first emulsion signal may cause respective devices to perform the operation of automatically mixing the water and the additive in the first fuel oil.

In the fuel supply apparatus with the fuel switching function according to the first aspect of the present invention, when the determining portion has determined that the fuel oil supplied to the diesel engine is the second fuel oil, a supply method output portion may output a second emulsion signal indicating that the water should be mixed in the second fuel oil.

With this, in a case where the second fuel oil (Bunker C, for example) is such a fuel oil that can be used as the second fuel emulsion by being mixed with the water, and when the determining portion has determined that the fuel oil supplied to the diesel engine is the second fuel oil, the supply method output portion can output the second emulsion signal indicating that the water should be mixed in the second fuel oil. Then, for example, the second emulsion signal can cause the display portion to display that the water should be mixed in the second fuel oil. With this, the operator can see the display and confirm that the fuel oil supplied to the diesel engine is the second fuel oil. After that, the operator can perform the operation of mixing the water in the second fuel oil. Therefore, the second fuel emulsion produced by mixing the water in the second fuel oil can be surely supplied to the diesel engine. Moreover, the second emulsion signal may cause respective devices to perform the operation of automatically mixing the water in the second fuel oil.

The fuel supply apparatus with the fuel switching function according to the first aspect of the present invention may include a first interlock portion configured to set such that the water and the additive are able to be automatically or manually supplied to the first fuel oil, on a condition that the supply method output portion has output the first emulsion signal.

A case where the supply method output portion outputs the first emulsion signal as above is a case where the determining portion has determined that the fuel oil supplied to the diesel engine is the first fuel oil (Bunker A, for example). On the condition that the determining portion has determined that the fuel oil supplied to the diesel engine is the first fuel oil (Bunker A, for example), the fuel supply apparatus with the fuel switching function can set such that the water and the additive can be automatically or manually supplied to the first fuel oil.

Therefore, when the determining portion has determined that the second fuel oil (Bunker C, for example) is being supplied to the diesel engine, the first interlock portion can prohibit the water and the additive from being automatically or manually supplied.

The fuel supply apparatus with the fuel switching function according to the first aspect of the present invention may include a second interlock portion configured to set such that the water is able to be automatically or manually supplied to the second fuel oil, on a condition that the supply method output portion has output the second emulsion signal.

A case where the supply method output portion outputs the second emulsion signal as above is a case where the determining portion has determined that the fuel oil supplied to the diesel engine is the second fuel oil (Bunker C, for example). On the condition that the determining portion has determined that the fuel oil supplied to the diesel engine is the second fuel oil (Bunker C, for example), the fuel supply apparatus with the fuel switching function can set such that the water can be automatically or manually supplied to the second fuel oil.

Therefore, when the determining portion has determined that the first fuel oil (Bunker A, for example) is being supplied to the diesel engine, the second interlock portion can prohibit the water (not containing the additive) from being automatically or manually supplied.

The fuel supply apparatus with the fuel switching function according to a second aspect of the present invention is a fuel supply apparatus configured to switch from a state where first fuel oil not containing water is being supplied to a diesel engine to a state where a second fuel emulsion containing second fuel oil and the water is supplied to the diesel engine, the fuel supply apparatus including: a supply passage switching portion configured to switch supply passages such that a desired one of the first fuel oil and the second fuel oil is supplied to the diesel engine; a fuel density detecting portion configured to detect density of the fuel oil supplied to the diesel engine; a water supply portion configured to supply the water to a mixer communicating with the diesel engine; and a third interlock portion configured to set such that the water supply portion is able to supply the water, on a condition that the fuel density detecting portion has detected the density of the second fuel oil since the supply passage switching portion has been switched to supply the second fuel oil to the diesel engine when switching from the state where the first fuel is being supplied to the diesel engine to the state where the second fuel emulsion is supplied to the diesel engine.

The fuel supply apparatus with the fuel switching function according to the second aspect of the present invention can switch from the state where the first fuel oil (Bunker A, for example) not containing the water is being supplied to the diesel engine to the state where the second fuel emulsion containing the second fuel oil (Bunker C, for example) and the water is supplied to the diesel engine. Then, the water supply portion can supply the water on the condition that the fuel density detecting portion has detected the density of the second fuel oil since the supply passage switching portion has been switched to supply the second fuel oil to the diesel engine when switching the state as above.

Therefore, when the fuel density detecting portion is not detecting the density of the second fuel oil, the third interlock portion can prohibit the water (not containing the additive) from being supplied through the mixer to the diesel engine. With this, unexpected damages on the diesel engine and the fuel supply system can be surely prevented from occurring.

The fuel supply apparatus with the fuel switching function according to a third aspect of the present invention is a fuel supply apparatus configured to switch from a state where a second fuel emulsion containing second fuel oil and water is being supplied to a diesel engine to a state where first fuel oil not containing the water is supplied to the diesel engine, the fuel supply apparatus including: a water supply portion configured to supply the water to a mixer communicating with the diesel engine; a fuel density detecting portion configured to detect density of the fuel oil supplied to the diesel engine; a supply passage switching portion configured to switch supply passages such that a desired one of the first fuel oil and the second fuel oil is supplied to the diesel engine; and a fourth interlock portion configured to set such that the supply passage switching portion is able to be switched to supply the first fuel oil to the diesel engine, on a condition that the fuel density detecting portion has detected the density of the second fuel oil since the water supply portion has stopped supplying the water when switching from the state where the second fuel emulsion is being supplied to the diesel engine to the state where the first fuel oil is supplied to the diesel engine.

The fuel supply apparatus with the fuel switching function according to the third aspect of the present invention can switch from the state where the second fuel emulsion containing the second fuel oil (Bunker C, for example) and the water is being supplied to the diesel engine to the state where the first fuel oil (Bunker A, for example) not containing the water is supplied to the diesel engine. Then, the supply passage switching portion can be switched to supply the first fuel oil (Bunker A, for example) to the diesel engine on the condition that the fuel density detecting portion has detected the density of the second fuel oil (Bunker C, for example) since the water supply portion has stopped supplying the water when switching the state as above.

Therefore, when the fuel density detecting portion is not detecting the density of the second fuel oil, the fourth interlock portion can prohibit the supply passage switching portion from being switched such that the first fuel oil (Bunker A, for example) is supplied to the diesel engine. With this, unexpected damages on the diesel engine and the fuel supply system can be surely prevented from occurring.

The fuel supply apparatus with the fuel switching function according to a fourth aspect of the present invention is a fuel supply apparatus configured to switch from a state where a second fuel emulsion containing second fuel oil and water is being supplied to a diesel engine to a state where a first fuel emulsion containing first fuel oil, the water, and an additive is supplied to the diesel engine, the fuel supply apparatus including: a water supply portion configured to supply the water to a mixer communicating with the diesel engine; an additive supply portion configured to supply the additive to the mixer; a fuel density detecting portion configured to detect density of the fuel oil supplied to the diesel engine; a supply passage switching portion configured to switch supply passages such that a desired one of the first fuel oil and the second fuel oil is supplied to the diesel engine; a fifth interlock portion configured to set such that the supply passage switching portion is able to be switched to supply the first fuel oil to the diesel engine, on a condition that the fuel density detecting portion has detected the density of the second fuel oil since the water supply portion has stopped supplying the water when switching from the state where the second fuel emulsion is being supplied to the diesel engine to the state where the first fuel emulsion is supplied to the diesel engine; and a sixth interlock portion configured to set such that the water supply portion is able to supply the water and the additive supply portion is able to supply the additive, on a condition that the fuel density detecting portion has detected the density of the first fuel oil since the supply passage switching portion has been switched to supply the first fuel oil to the diesel engine.

The fuel supply apparatus with the fuel switching function according to the fourth aspect of the present invention can switch from the state where the second fuel emulsion containing the second fuel oil (Bunker C, for example) and the water is being supplied to the diesel engine to the state where the first fuel emulsion containing the first fuel oil (Bunker A, for example), the water, and the additive is supplied to the diesel engine. Then, the supply passage switching portion can be switched to supply the first fuel oil to the diesel engine on the condition that the fuel density detecting portion has detected the density of the second fuel oil since the water supply portion has stopped supplying the water when switching the state as above.

Therefore, when the fuel density detecting portion is not detecting the density of the second fuel oil, the fifth interlock portion can prohibit the supply passage switching portion from being switched such that the first fuel oil (Bunker A, for example) is supplied to the diesel engine.

Moreover, the fuel supply apparatus with the fuel switching function can set such that the water supply portion can supply the water and the additive supply portion can supply the additive, on the condition that the fuel density detecting portion has detected the density of the first fuel oil since the supply passage switching portion has been switched to supply the first fuel oil (Bunker A, for example) to the diesel engine.

Therefore, when the fuel density detecting portion is not detecting the density of the first fuel oil (Bunker A, for example), the sixth interlock portion can prohibit the water supply portion from supplying the water and the additive supply portion from supplying the additive. With this, unexpected damages on the diesel engine and the fuel supply system can be surely prevented from occurring.

The fuel supply apparatus with the fuel switching function according to a fifth aspect of the present invention is a fuel supply apparatus configured to switch from a state where a first fuel emulsion containing first fuel oil, water, and an additive is being supplied to a diesel engine to a state where a second fuel emulsion containing second fuel oil and the water is supplied to the diesel engine, the fuel supply apparatus including: a water supply portion configured to supply the water to a mixer communicating with the diesel engine; an additive supply portion configured to supply the additive to the mixer; a fuel density detecting portion configured to detect density of the fuel oil supplied to the diesel engine; a supply passage switching portion configured to switch supply passages such that a desired one of the first fuel oil and the second fuel oil is supplied to the diesel engine; a seventh interlock portion configured to set such that the supply passage switching portion is able to be switched to supply the second fuel oil to the diesel engine, on a condition that the fuel density detecting portion has detected the density of the first fuel oil since the water supply portion has stopped supplying the water and the additive supply portion has stopped supplying the additive when switching from the state where the first fuel emulsion is being supplied to the diesel engine to the state where the second fuel emulsion is supplied to the diesel engine; and an eighth interlock portion configured to set such that the water supply portion is able to supply the water, on a condition that the fuel density detecting portion has detected the density of the second fuel oil since the supply passage switching portion has been switched to supply the second fuel oil to the diesel engine.

The fuel supply apparatus with the fuel switching function according to the fifth aspect of the present invention can switch from the state where the first fuel emulsion containing the first fuel oil (Bunker A, for example), the water, and the additive is being supplied to the diesel engine to the state where the second fuel emulsion containing the second fuel oil (Bunker C, for example) and the water is supplied to the diesel engine. Then, the supply passage switching portion can be switched to supply the second fuel oil to the diesel engine on the condition that the fuel density detecting portion has detected the density of the first fuel oil since the water supply portion has stopped supplying the water and the additive supply portion has stopped supplying the additive when switching the state as above.

Therefore, when the fuel density detecting portion is not detecting the density of the first fuel oil, the seventh interlock portion can prohibit the supply passage switching portion from being switched such that the second fuel oil is supplied to the diesel engine.

Moreover, on the condition that the fuel density detecting portion has detected the density of the second fuel oil since the supply passage switching portion has been switched to supply the second fuel oil (Bunker C, for example) to the diesel engine, the fuel supply apparatus with the fuel switching function can set such that the water supply portion can supply the water.

Therefore, when the fuel density detecting portion is not detecting the density of the second fuel oil, the eighth interlock portion can prohibit the water supply portion from supplying the water. With this, unexpected damages on the diesel engine and the fuel supply system can be surely prevented from occurring.

### Advantageous Effects of Invention

The fuel supply apparatus with the fuel switching function according to the first aspect of the present invention is configured such that the determining portion can determine whether the fuel oil currently supplied to the diesel engine is the first fuel oil (Bunker A, for example) or the second fuel oil (Bunker C, for example). Based on the result of the determination by the determining portion, the fuel supply apparatus with the fuel switching function can supply the appropriate water-emulsion fuel or fuel to the diesel engine. Therefore, unexpected damages on the diesel engine and the fuel supply system can be surely prevented from occurring.

### Brief Description of Drawings

[Fig. 1] Fig. 1 is a circuit diagram showing a fuel supply apparatus with a fuel switching function according to Embodiment 1 of the present invention.
[Fig. 2] Fig. 2 is a circuit diagram showing the fuel supply apparatus with the fuel switching function according to Embodiment 2 of the present invention.
[Fig. 3] Fig. 3 is a diagram showing switching patterns and procedures of various heavy oil emulsions in the fuel supply apparatus with the fuel switching function according to Embodiments 1 and 2 of the present invention.

### Description of Embodiments

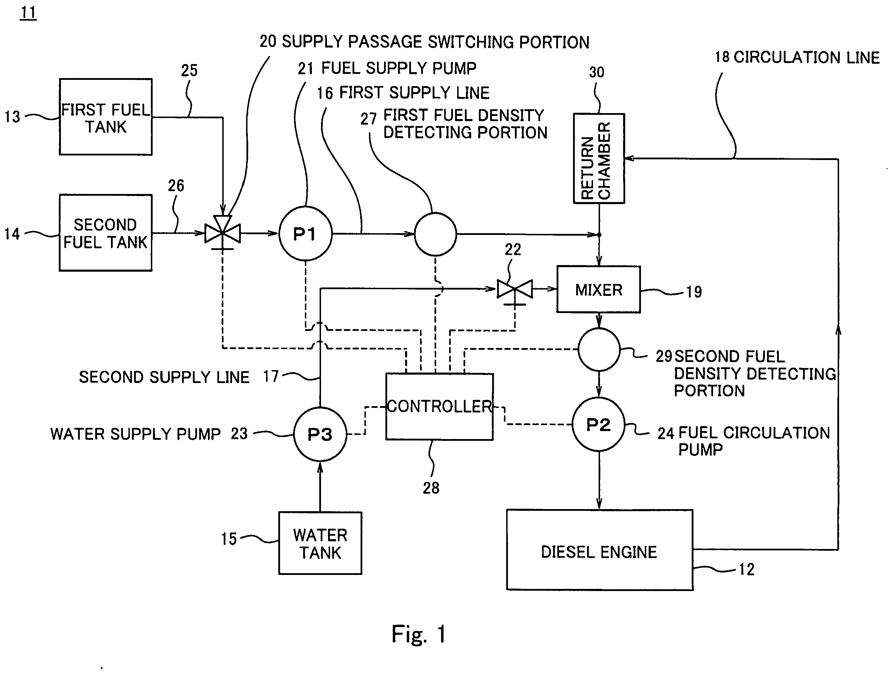

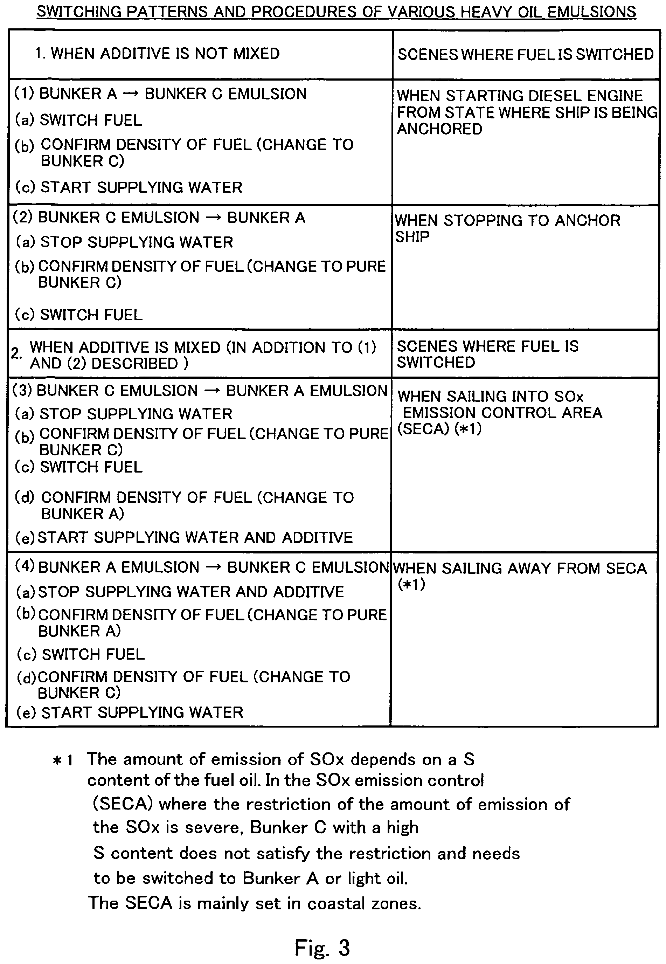

Hereinafter, Embodiment 1 of a fuel supply apparatus with a fuel switching function (hereinafter may be simply referred to as a "fuel supply apparatus") according to the present invention will be explained in reference to Figs. 1 and 3. A fuel supply apparatus 11 with a fuel switching function is capable of, in a desired scene such as start or stop of a diesel engine 12, producing and using a fuel suitable for such a scene by selecting predetermined materials among plural types of oil such as first fuel oil (Bunker A, for example) and second fuel oil (Bunker C, for example), and water and also capable of supplying such a fuel to the diesel engine 12 in such a desired scene.

To be specific, as one example of a fuel supply pattern by the fuel supply apparatus 11 shown in Fig. 1, a Bunker C emulsion obtained by mixing second fuel oil (Bunker C, for example) stored in a second fuel tank 14 and water stored in a water tank 15 by using a mixer 19 can be caused to circulate in a circulation line 18, and the Bunker C emulsion circulating in the circulation line 18 can be supplied to the diesel engine 12 connected to the circulation line 18.

At this time, an operating lever of a supply passage switching portion 20 is operated such that the second fuel (Bunker C) in the second fuel tank 14 is drawn into a suction port of a fuel supply pump 21, and an on-off valve 22 provided on a second supply line 17 is open. Then, the fuel supply pump 21, a water supply pump 23, and a fuel circulation pump 24 are operating.

As another example of the fuel supply pattern by the fuel supply apparatus 11 shown in Fig. 1, the first fuel oil (Bunker A, for example) stored in a first fuel tank 13 can be caused to circulate in the circulation line 18, and the Bunker A circulating in the circulation line 18 can be supplied to the diesel engine 12 connected to the circulation line 18.

At this time, the operating lever of the supply passage switching portion 20 is operated such that the first fuel (Bunker A) in the first fuel tank 13 is drawn into the suction port of the fuel supply pump 21, and the on-off valve 22 is closed. Then, the fuel supply pump 21 and the fuel circulation pump 24 are operating, but the water supply pump 23 is in a stop state.

Yet another example of the fuel supply pattern by the fuel supply apparatus 11 shown in Fig. 1, the second fuel oil (Bunker C, for example) stored in the second fuel tank 14 can be caused to circulate in the circulation line 18, and the Bunker C circulating in the circulation line 18 can be supplied to the diesel engine 12 connected to the circulation line 18.

At this time, the operating lever of the supply passage switching portion 20 is operated such that the second fuel (Bunker C) in the second fuel tank 14 is drawn into the suction port of the fuel supply pump 21, and the on-off valve 22 is closed. Then, the fuel supply pump 21 and the fuel circulation pump 24 are operating, but the water supply pump 23 is in a stop state.

The first fuel tank 13 can store the first fuel oil, and the first fuel oil is, for example, Bunker A.

The second fuel tank 14 can store the second fuel oil, and the second fuel is, for example, Bunker C.

As shown in Fig. 1, exits of the first fuel tank 13 and the second fuel tank 14 are connected to the supply passage switching portion 20 (three-way selector valve) through pipes 25 and 26, respectively. The supply passage switching portion 20 can switch fuel supply passages such that desired heavy oil out of Bunker A stored in the first fuel tank 13 and Bunker C stored in the second fuel tank 14 is introduced to the suction port of the fuel supply pump 21 located downstream of the supply passage switching portion 20.

The fuel supply pump 21 can supply the heavy oil to the mixer 19, the heavy oil having been introduced through the supply passage switching portion 20 and being Bunker A in the first fuel tank 13 or Bunker C in the second fuel tank 14, and can apply predetermined pressure to the fuel (Bunker A, Bunker C, or the Bunker C emulsion) in the circulation line 18. The fuel supply pump 21 is provided on a portion of a first supply line 16 (pipe) connecting the supply passage switching portion 20 and a first entrance of the mixer 19. The fuel supply pump 21 is configured to be driven by an electric motor, not shown.

As shown in Fig. 1, a first fuel density detecting portion 27 is provided on a portion of the first supply line 16 so as to be located downstream of the fuel supply pump 21.

The first fuel density detecting portion 27 can detect the density of the fuel, such as Bunker A or Bunker C, supplied through the first supply line 16 to the circulation line 18, generate a density signal corresponding to the detected density of the fuel, and transmit the density signal to a below-described controller 28.

The water tank 15 can store water, and the water supply pump 23 (water supply portion) is connected to an exit of the water tank 15.

The water supply pump 23 can supply the water in the water tank 15 to the mixer 19 and is provided on a portion of the second supply line 17 (pipe) connecting the exit of the water tank 15 and a second entrance of the mixer 19. The water supply pump 23 is configured to be driven by, for example, an electric motor.

As shown in Fig. 1, the on-off valve 22 is provided on a portion of the second supply line 17 so as to be located downstream of the water supply pump 23. The on-off valve 22 can close the second supply line 17. With this, the water can be prevented from flowing into the mixer 19.

Next, the circulation line 18 shown in Fig. 1 will be explained. The circulation line 18 is formed by a pipe connected in an annular shape and is configured such that a water-emulsion fuel containing water or a fuel not containing water flows through the circulation line 18 in a counterclockwise direction. By the circulation line 18, the water-emulsion fuel circulating in the circulation line 18 or the fuel not containing the water and circulating in the circulation line 18 can be supplied to the diesel engine 12 connected to the circulation line 18. The mixer 19, a second fuel density detecting portion 29, the fuel circulation pump 24, the diesel engine 12, and a return chamber 30 are provided on the circulation line 18.

The mixer 19 can produce the Bunker C emulsion by mixing and stirring the second fuel (Bunker C) supplied by the fuel supply pump 21 and the water supplied by the water supply pump 23. The Bunker C emulsion produced by the mixer 19 is supplied to the second fuel density detecting portion 29 provided downstream of the mixer 19. Moreover, only Bunker A or Bunker C may be supplied to the mixer 19 without supplying the water, and Bunker A or Bunker C may be then supplied to the second fuel density detecting portion 29.

The second fuel density detecting portion 29 can detect the density of the fuel, such as Bunker A, Bunker C, or the Bunker C emulsion, circulating through the circulation line 18, generate the density signal corresponding to the detected density of the fuel, and transmit the density signal to the below-described controller 28.

The fuel circulation pump 24 can increase the pressure of the fuel, such as the Bunker C emulsion, in the circulation line 18 to predetermined pressure to cause the fuel to circulate. The fuel circulation pump 24 is configured to be driven by, for example, an electric motor.

The diesel engine 12 is connected to the circulation line 18 and is configured to receive the fuel, such as the Bunker C emulsion or Bunker A, flowing in the circulation line 18. The diesel engine 12 is provided with a fuel injection pump (not shown), and the fuel injection pump can increase the pressure of the fuel, such as the Bunker C emulsion, supplied through the circulation line 18 up to injection pressure and inject the fuel from a fuel injection valve of the diesel engine 12 to a combustion chamber of the diesel engine 12.

The return chamber 30 is a chamber provided for returning the fuel, such as the Bunker C emulsion, unconsumed in the diesel engine 12, to the mixer 19 through the circulation line 18.

Next, the controller 28 shown in Fig. 1 will be explained. The controller 28 is constituted by a central processing unit and can perform various calculations and processing operations in accordance with a predetermined program prestored in a storage portion. As shown in Fig. 1, the controller 28 is electrically connected to the fuel supply pump 21, the fuel circulation pump 24, the water supply pump 23, the supply passage switching valve, the first fuel density detecting portion 27, the second fuel density detecting portion 29, the on-off valve 22, the diesel engine 12, and the like and can control the operations of these components. In addition, the controller 28 can calculate or process signals transmitted from these components and can cause these components to perform predetermined operations.

Although not shown, the controller 28 includes a determining portion, a supply method output portion, a third interlock portion (second interlock portion), and a fourth interlock portion.

The determining portion can determine whether or not the fuel oil supplied to the diesel engine 12 is the first fuel oil (Bunker A) and whether or not the fuel oil supplied to the diesel engine 12 is the second fuel oil (Bunker C).

To be specific, based on the density signal transmitted from the first fuel density detecting portion 27 shown in Fig. 1 to the controller 28, the determining portion can determine, for example, whether or not the fuel supplied through the first supply line 16 to the circulation line 18 is the Bunker A, whether or not the fuel is the Bunker C, and whether or not the fuel is the Bunker C emulsion.

In addition, based on the density signal transmitted from the second fuel density detecting portion 29 shown in Fig. 1 to the controller 28, the determining portion can determine, for example, whether or not the fuel supplied through the circulation line 18 to the diesel engine 12 is Bunker A, whether or not the fuel is Bunker C, and whether or not the fuel is the Bunker C emulsion.

When the determining portion has determined that the fuel oil flowing in the first supply line 16 is complete (unmixed) (hereinafter may be simply referred to as "complete") second fuel oil (Bunker C) and has further determined that the fuel oil flowing in the circulation line 18 is the second fuel oil (Bunker C), the supply method output portion can output a second emulsion signal indicating that water should be mixed in the second fuel oil (Bunker C).

It should be noted that a case where as described above, the determining portion outputs the second emulsion signal, indicating that the water should be mixed in the second fuel oil (Bunker C), when the determining portion has determined that each of the fuel oil flowing through the first supply line 16 and the fuel oil flowing through the circulation line 18 is the second fuel oil (Bunker C) is a case where, for example, an operator has operated the fuel supply apparatus 11 in advance to set such that the Bunker C emulsion is supplied to the diesel engine 12, and the supply passage switching portion 20 shown in Fig. 1 has been switched and the Bunker C in the second fuel tank 14 is being supplied to the first supply line 16.

Therefore, in a case where the operator has operated the fuel supply apparatus 11 to set such that only Bunker C not containing water is supplied to the diesel engine 12, the determining portion does not output the second emulsion signal even when the determining portion has determined that the fuel oil flowing through the first supply line 16 is the second fuel oil (Bunker C) and that the fuel oil flowing through the circulation line 18 is the second fuel oil (Bunker C).

The second emulsion signal is a signal indicating that water should be mixed in the second fuel oil (Bunker C). Specifically, the second emulsion signal is a signal which automatically opens the on-off valve 22 of the second supply line 17 shown in Fig. 1 and automatically drives the water supply pump 23 to supply the water to the mixer 19. Further, by the second emulsion signal, a display portion (not shown) displays that the on-off valve 22 is opened and the water supply pump 23 is driven.

In addition, at this time, the display portion can display that the first fuel density detecting portion 27 has detected that the fuel flowing through the first supply line 16 is the complete Bunker C and the second fuel density detecting portion 29 has detected that the fuel flowing through the circulation line 18 is the complete Bunker C.

Here, the purpose of waiting the output of the second emulsion signal until the determining portion determines that the fuel oil flowing through both the first supply line 16 and the circulation line 18 is the second fuel oil (Bunker C) and outputting the second emulsion signal when the determining portion has determined that the fuel oil flowing through the first supply line 16 and the circulation line 18 is the second fuel oil (Bunker C) is to surely prevent the water from being supplied to the circulation line 18 with Bunker A remaining in even one of the first supply line 16 and the circulation line 18. This is because if the water is mixed in Bunker A without an additive, the diesel engine 12 and the fuel supply system (the circulation line 18 and the like) are adversely affected.

As above, according to the fuel supply apparatus 11 with the fuel switching function, since the determining portion can determine whether or not the fuel oil currently supplied to the diesel engine 12 is the first fuel oil (Bunker A, for example) and whether or not the fuel oil is the second fuel oil (Bunker C, for example), predetermined fuel oil, such as an appropriate water-emulsion fuel, can be supplied to the diesel engine 12. Therefore, unexpected damages on the diesel engine 12 and the fuel supply system can be surely prevented from occurring.

The fuel supply apparatus 11 is configured such that when the supply method output portion has output the second emulsion signal, the on-off valve 22 of the second supply line 17 is automatically opened and the water supply pump 23 is automatically driven to supply the water to the mixer 19. However, instead of this, the fuel supply apparatus 11 may be configured such that the operator sees the display portion displaying that "open the on-off valve 22 and drive the water supply pump 23" and then performs these operations.

With this, the operator can see the display portion to confirm that the fuel flowing through both the first supply line 16 and the circulation line 18 is the second fuel oil (Bunker C), and in this state, the operator can perform an operation of mixing the water in the second fuel oil (Bunker C). Therefore, the Bunker C emulsion produced by mixing the water in the second fuel oil (Bunker C) can be surely supplied to the diesel engine 12.

Next, the third interlock portion (second interlock portion) included in the controller 28 will be explained in reference to Fig. 3. As shown in Fig. 3, 1.(1), the fuel supply apparatus 11 with the fuel switching function shown in Fig. 1 and including the third interlock portion (second interlock portion) can switch from a state where the first fuel oil (Bunker A) not containing water is being supplied to the diesel engine 12 to a state where the Bunker C emulsion containing the second fuel oil (Bunker C) and water is supplied to the diesel engine 12.

One example of a scene in which the fuel supplied to the diesel engine 12 is switched from Bunker A to the Bunker C emulsion as above is a scene in which the diesel engine 12 is started from a state where the ship is being anchored. Here, the reason why Bunker A is supplied to the diesel engine 12 when anchoring the ship is because even if Bunker A is supplied to the diesel engine 12, the first supply line 16, and the circulation line 18 shown in Fig. 1 and the diesel engine 12 stops for a long period of time, Bunker A having low viscosity does not solidify and the diesel engine 12 can be started comparatively easily. In the case of Bunker C having high viscosity, it is difficult to start the diesel engine 12.

The purpose of supplying the Bunker C emulsion when starting the diesel engine 12 is to reduce NO_{X} in an exhaust gas of the diesel engine 12 and reduce fuel cost.

The procedure of the above-described fuel switching is as follows. The supply passage switching portion 20 is being currently set such that Bunker A in the first fuel tank 13 is supplied to the fuel supply pump 21. Therefore, first, the supply passage switching portion 20 is manually or automatically operated such that Bunker C in the second fuel tank 14 is supplied to the fuel supply pump 21 (see Fig. 3, 1.(1)(a)). To be specific, Bunker A is consumed in the diesel engine 12, and therefore, by operating the supply passage switching portion 20 as above, the fuel oil in the first supply line 16 and the circulation line 18 can be changed from Bunker A to Bunker C. The purpose of changing the fuel oil in the first supply line 16 and the circulation line 18 from Bunker A to Bunker C as above is to prevent water from being mixed in Bunker A remaining in the lines 16 and 18.

Next, when both the fuel oil flowing through the first supply line 16 and the fuel oil flowing through the circulation line 18 have become the complete Bunker C, the first and second fuel density detecting portions 27 and 29 output the density signals indicating so. Then, the determining portion determines that the heavy oil supplied to the diesel engine 12 is Bunker C, and the supply method output portion outputs based on the result of the determination the second emulsion signal indicating that the water should be mixed in the second fuel oil (Bunker C) (see Fig. 3, 1.(1)(b)).

After that, the on-off valve 22 is manually or automatically opened and the water supply pump 23 is driven to supply the water to the mixer 19 (see Fig. 3, 1.(1)(c)). Thus, the supplied fuel can be switched from Bunker A to the Bunker C emulsion.

Here, on the condition that each of both the first and second fuel density detecting portions 27 and 29 has output the density signal indicating that the fuel oil flowing through the first supply line 16 or the fuel oil flowing through the circulation line 18 is the complete Bunker C (see Fig. 3, 1.(1)(b)), the third interlock portion (second interlock portion) can set such that the on-off valve 22 can be manually or automatically opened and the water supply pump 23 can be manually or automatically driven to supply the water to the mixer 19 (see Fig. 3, 1.(1)(c)).

Therefore, when at least one of the first and second fuel density detecting portions 27 and 29 does not output the density signal indicating that the fuel oil flowing through the first supply line 16 or the fuel oil flowing through the circulation line 18 is the complete Bunker C (for example, when at least one of the first and second fuel density detecting portions 27 and 29 outputs the density signal indicating that Bunker A is mixed in the fuel oil flowing through the first supply line 16 or the fuel oil flowing through the circulation line 18), the third interlock portion (second interlock portion) can prohibit the water (not containing an additive) from being supplied to the diesel engine 12 by the misoperation of the operator or the malfunction of a device (for example, prohibit the on-off valve 22 from being opened and the water supply pump 23 from being driven). With this, unexpected damages on the diesel engine 12 and the fuel supply system can be surely prevented from occurring.

Next, the fourth interlock portion included in the controller 28 will be explained in reference to Fig. 3. As shown in Fig. 3, 1.(2), the fuel supply apparatus 11 with the fuel switching function shown in Fig. 1 and including the fourth interlock portion can switch from a state where the Bunker C emulsion containing the second fuel oil (Bunker C) and water is supplied to the diesel engine 12 to a state where the first fuel oil (Bunker A) not containing water is supplied to the diesel engine 12.

One example of a scene in which the fuel supplied to the diesel engine 12 is switched from the Bunker C emulsion to Bunker A as above is a scene in which the diesel engine 12 is stopped to anchor the ship. The reason why Bunker A is supplied to the diesel engine 12 when anchoring the ship is described above.

The procedure of the above-described fuel switching is as follows. The supply passage switching portion 20 is being currently set such that Bunker C in the second fuel tank 14 is supplied to the fuel supply pump 21, and the water in the water tank 15 is being supplied to the mixer 19. Therefore, first, the water supply pump 23 is manually or automatically stopped, and the on-off valve 22 is closed to stop supplying the water to the mixer 19 (see Fig. 3, 1.(2)(a)). To be specific, the Bunker C emulsion is consumed in the diesel engine 12, and therefore, by the above operation, the fuel oil in the circulation line 18 can be changed from the Bunker C emulsion to Bunker C. The purpose of changing the fuel oil in the circulation line 18 from the Bunker C emulsion to Bunker C as above is to prevent Bunker A from being mixed in the Bunker C emulsion remaining in the circulation line 18.

Next, when both the fuel oil flowing through the first supply line 16 and the fuel oil flowing through the circulation line 18 have become the complete Bunker C, the first and second fuel density detecting portions 27 and 29 output the density signals indicating so. Then, the determining portion determines that the heavy oil supplied to the diesel engine 12 is Bunker C (see Fig. 3, 1.(2)(b)).

After that, the supply passage switching portion 20 is manually or automatically operated such that Bunker A in the first fuel tank 13 is supplied to the fuel supply pump 21 (see Fig. 3, 1.(2)(c)). Thus, the supplied fuel can be switched from the Bunker C emulsion to Bunker A.

Here, on the condition that each of both the first and second fuel density detecting portions 27 and 29 has output the density signal indicating that the fuel oil flowing through the first supply line 16 or the fuel oil flowing through the circulation line 18 is the complete Bunker C (see Fig. 3, 1.(2)(b)), the fourth interlock portion can set such that the supply passage switching portion 20 can be manually or automatically operated to supply Bunker A in the first fuel tank 13 to the fuel supply pump 21 (see Fig. 3, 1.(2)(c)).

Therefore, when at least one of the first and second fuel density detecting portions 27 and 29 does not output the density signal indicating that the fuel oil flowing through the first supply line 16 or the fuel oil flowing through the circulation line 18 is the complete Bunker C (for example, when at least one of the first and second fuel density detecting portions 27 and 29 outputs the density signal indicating that the fuel oil flowing through the first supply line 16 or the fuel oil flowing through the circulation line 18 is not the complete Bunker C), the fourth interlock portion can prohibit Bunker A from being supplied to the diesel engine 12 by the erroneous operation of the operator or the malfunction of a device (for example, prohibit Bunker A in the first fuel tank 13 from being supplied to the fuel supply pump 21 by operating the supply passage switching portion 20). With this, unexpected damages on the diesel engine 12 and the fuel supply system can be surely prevented from occurring.

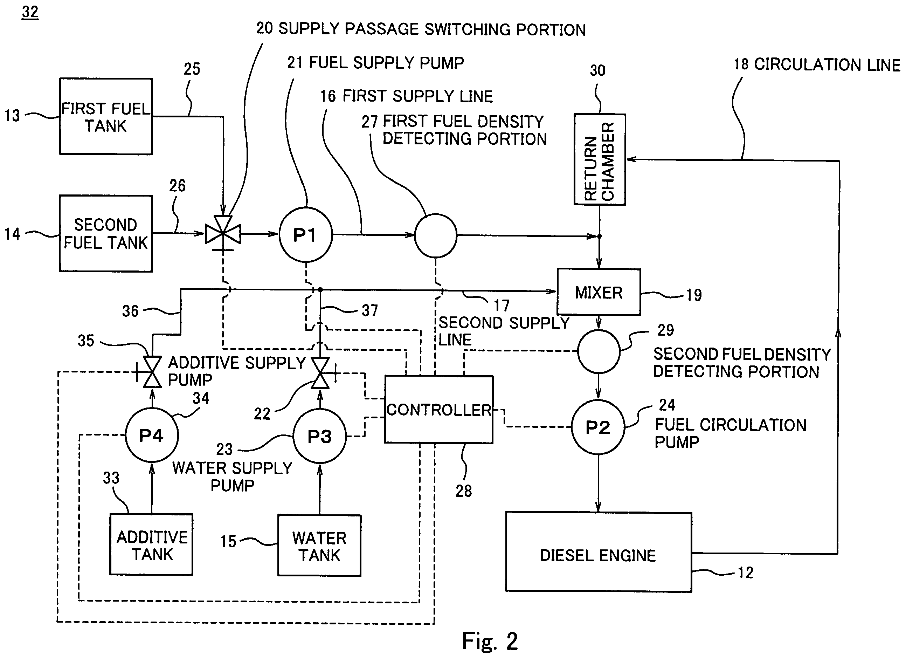

Next, Embodiment 2 of the fuel supply apparatus with the fuel switching function (hereinafter may be simply referred to as the "fuel supply apparatus") according to the present invention will be explained in reference to Figs. 2 and 3. A fuel supply apparatus 32 of Embodiment 2 shown in Fig. 2 is configured such that the fuel supply apparatus 11 of Embodiment 1 shown in Fig. 1 further includes an additive tank 33, an additive supply pump 34, and an on-off valve 35.

The additive tank 33 can store, for example, a liquid additive, such as a surfactant, and the additive supply pump 34 is connected to an exit of the additive tank 33.

The additive supply pump 34 can supply the additive in the additive tank 33 to the mixer 19 and is provided on a portion of the second supply line 17 (pipe) connecting the exit of the additive tank 33 and the second entrance of the mixer 19. The additive supply pump 34 is configured to be driven by, for example, an electric motor.

As shown in Fig. 2, the on-off valve 35 is provided on a portion of the second supply line 17, that is, on a pipe 36 located downstream of the additive supply pump 34. The on-off valve 36 can close the pipe 36 connected to a discharge port of the additive supply pump 34 and thus prevents the additive from flowing into the mixer 19.

As shown in Fig. 2, the on-off valve 22 is provided on a pipe 37 located downstream of the water supply pump 23. As with Embodiment 1 shown in Fig. 1, the on-off valve 22 can close the pipe 37 connected to a discharge port of the water supply pump 23 and thus prevents the water from flowing into the mixer 19.

As shown in Fig. 2, the additive supply pump 34 and the on-off valve 35 are electrically connected to the controller 28, and the controller 28 can control the operations of these components.

Further, the controller 28 includes the determining portion and the like included in the controller 28 of Embodiment 1 and further includes a fifth interlock portion, a sixth interlock portion (first interlock portion), a seventh interlock portion, and an eighth interlock portion (second interlock portion).

Other than the above, the fuel supply apparatus 32 of Embodiment 2 is the same in configuration as the fuel supply apparatus 11 of Embodiment 1 shown in Fig. 1, and the actions thereof are the same as those of Embodiment 1. Therefore, the same reference signs are used for the same components, and explanations thereof are omitted.

Next, one example of the fuel supply pattern which can be used by the fuel supply apparatus 32 shown in Fig. 2 will be explained. The fuel supply apparatus 32 can use the fuel supply pattern of Embodiment 1. Further, the fuel supply apparatus 32 is configured such that a Bunker A emulsion obtained by mixing the first fuel oil (Bunker A, for example) stored in the first fuel tank 13, the water stored in the water tank 15, and the additive stored in the additive tank 33 by using the mixer 19 can be caused to circulate in the circulation line 18 and the Bunker A emulsion circulating in the circulation line 18 can be supplied to the diesel engine 12 connected to the circulation line 18.

At this time, the operating lever of the supply passage switching portion 20 is operated such that the first fuel (Bunker A) in the first fuel tank 13 is drawn into the suction port of the fuel supply pump 21, and the on-off valves 22 and 35 on the second supply line 17 are open. Then, the fuel supply pump 21, the water supply pump 23, the additive supply pump 34, and the fuel circulation pump 24 are operating.

Next, the fifth interlock portion and sixth interlock portion (first interlock portion) included in the controller 28 will be explained in reference to Fig. 3. As shown in Fig. 3, 2.(3), the fuel supply apparatus 32 with the fuel switching function shown in Fig. 2 and including the interlock portions can switch from a state where the Bunker C emulsion is being supplied to the diesel engine 12 to a state where the Bunker A emulsion is supplied to the diesel engine 12.

One example of a scene in which the fuel supplied to the diesel engine 12 is switched from the Bunker C emulsion to the Bunker A emulsion as above is a scene in which the ship sails into a SO_{X} emission control area (SECA). The purpose of switching the fuel supplied to the diesel engine 12 from the Bunker C emulsion to the Bunker A emulsion is to prevent SO_{X} from being contained in the exhaust gas and discharged to the outside. To be specific, the amount of emission of the SO_{X} depends on a S (sulfur) content of the fuel oil. In the SO_{X} emission control area (SECA) where the restriction of the amount of emission of the SO_{X} is severe, Bunker C with a high S content does not satisfy the restriction and needs to be switched to Bunker A or light oil. The SECA is mainly set in coastal zones.

The procedure of the above-described fuel switching is as follows. The supply passage switching portion 20 is being currently set such that Bunker C in the second fuel tank 14 is supplied to the fuel supply pump 21, and the water in the water tank 15 is being supplied to the mixer 19. Therefore, first, the water supply pump 23 is manually or automatically stopped and the on-off valve 22 is closed to stop supplying the water to the mixer 19 (see Fig. 3, 2.(3)(a)). To be specific, the Bunker C emulsion is consumed in the diesel engine 12, and therefore, by the above operation, the fuel oil in the circulation line 18 can be changed from the Bunker C emulsion to Bunker C. The purpose of changing the fuel oil in the circulation line 18 from the Bunker C emulsion to Bunker C as above is to prevent Bunker A from being mixed in the Bunker C emulsion remaining in the circulation line 18.

Next, when both the fuel oil flowing through the first supply line 16 and the fuel oil flowing through the circulation line 18 have become the complete Bunker C, the first and second fuel density detecting portions 27 and 29 output the density signals indicating so. Then, the determining portion determines that the heavy oil supplied to the diesel engine 12 is Bunker C (see Fig. 3, 2.(3)(b)).

When the determining portion has determined that the heavy oil supplied to the diesel engine 12 is Bunker C, the supply passage switching portion 20 is manually or automatically operated such that Bunker A in the first fuel tank 13 is supplied to the fuel supply pump 21 (see Fig. 3, 2.(3)(c)).

Next, when both the fuel oil flowing through the first supply line 16 and the fuel oil flowing through the circulation line 18 have become the complete Bunker A, the first and second fuel density detecting portions 27 and 29 output the density signals indicating so. Then, the determining portion determines that the fuel oil supplied to the diesel engine 12 is Bunker A, and the supply method output portion outputs based on the result of the determination a first emulsion signal indicating that the water and an additive should be mixed in the first fuel oil (Bunker A) (see Fig. 3, 2.(3)(d)).

After that, the on-off valves 22 and 35 are manually or automatically opened and the water supply pump 23 and the additive supply pump 34 are driven to supply the water and the additive to the mixer 19 (see Fig. 3, 2.(3)(e)). Thus, the supplied fuel can be switched from the Bunker C emulsion to the Bunker A emulsion.

Here, on the condition that each of both the first and second fuel density detecting portions 27 and 29 has output the density signal indicating that the fuel oil flowing through the first supply line 16 or the fuel oil flowing through the circulation line 18 is the complete Bunker C (see Fig. 3, 2.(3)(b)), the fifth interlock portion can set such that the supply passage switching portion 20 can be manually or automatically operated to supply Bunker A in the first fuel tank 13 to the fuel supply pump 21 (see Fig. 3, 2.(3)(c)).

Therefore, when at least one of the first and second fuel density detecting portions 27 and 29 does not output the density signal indicating that the fuel oil flowing through the first supply line 16 or the fuel oil flowing through the circulation line 18 is the complete Bunker C (for example, when at least one of the first and second fuel density detecting portions 27 and 29 outputs the density signal indicating that the fuel oil flowing through the first supply line 16 or the fuel oil flowing through the circulation line 18 is not the complete Bunker C), the fifth interlock portion can prohibit Bunker A from being supplied to the diesel engine 12 by the erroneous operation of the operator or the malfunction of a device (for example, prohibit the supply passage switching portion 20 from being operated such that Bunker A in the first fuel tank 13 is supplied to the fuel supply pump 21). With this, unexpected damages on the diesel engine 12 and the fuel supply system can be surely prevented from occurring.

Then, on the condition that each of both the first and second fuel density detecting portions 27 and 29 has output the density signal indicating that the fuel oil flowing through the first supply line 16 or the fuel oil flowing through the circulation line 18 is the complete Bunker A (see Fig. 3, 2.(3)(d)), the sixth interlock portion (first interlock portion) can set such that the on-off valves 22 and 35 can be manually or automatically opened and the water supply pump 23 and the additive supply pump 34 can be manually or automatically driven to supply the water and the additive to the mixer 19 (see Fig. 3, 2.(3)(e)).

Therefore, when at least one of the first and second fuel density detecting portions 27 and 29 does not output the density signal indicating that the fuel oil flowing through the first supply line 16 or the fuel oil flowing through the circulation line 18 is the complete Bunker A (for example, when at least one of the first and second fuel density detecting portions 27 and 29 outputs the density signal indicating that the fuel oil flowing through the first supply line 16 or the fuel oil flowing through the circulation line 18 is mixed with the Bunker C emulsion or Bunker C), the sixth interlock portion (first interlock portion) can prohibit the water and the additive from being supplied to the diesel engine 12 by the erroneous operation of the operator or the malfunction of a device (for example, prohibit the on-off valves 22 and 35 from being opened and the water supply pump 23 and the additive supply pump 34 from being driven). With this, unexpected damages on the diesel engine 12 and the fuel supply system can be surely prevented from occurring.

Next, the seventh interlock portion and eighth interlock portion (second interlock portion) included in the controller 28 will be explained in reference to Fig. 3. As shown in Fig. 3, 2.(4), the fuel supply apparatus 32 with the fuel switching function shown in Fig. 2 and including the interlock portions can switch from a state where the Bunker A emulsion is being supplied to the diesel engine 12 to a state where the Bunker C emulsion is supplied to the diesel engine 12.

One example of a scene in which the fuel supplied to the diesel engine 12 is switched from the Bunker A emulsion to the Bunker C emulsion as above is a scene in which the ship sails away from the SO_{X} emission control area (SECA). The purpose of switching the fuel supplied to the diesel engine 12 from the Bunker A emulsion to the Bunker C emulsion as above is to use inexpensive Bunker C as much as possible.

The procedure of the above-described fuel switching is as follows. The supply passage switching portion 20 is being currently set such that Bunker A in the first fuel tank 13 is supplied to the fuel supply pump 21, and the water and the additive are being supplied to the mixer 19. Therefore, first, the water supply pump 23 and the additive supply pump 34 are manually or automatically stopped and the on-off valves 22 and 35 are closed to stop supplying the water and the additive to the mixer 19 (see Fig. 3, 2.(4)(a)). By the above operation, the fuel oil in the circulation line 18 can be changed from the Bunker A emulsion to Bunker A. The purpose of changing the fuel oil in the circulation line 18 from the Bunker A emulsion to Bunker A as above is to prevent Bunker C from being mixed in the Bunker A emulsion remaining in the circulation line 18.

Next, when both the fuel oil flowing through the first supply line 16 and the fuel oil flowing through the circulation line 18 have become the complete Bunker A, the first and second fuel density detecting portions 27 and 29 output the density signals indicating so. Then, the determining portion determines that the heavy oil supplied to the diesel engine 12 is Bunker A (see Fig. 3, 2.(4)(b)).

When the determining portion has determined that the heavy oil supplied to the diesel engine 12 is Bunker A, the supply passage switching portion 20 is manually or automatically operated such that Bunker C in the second fuel tank 14 is supplied to the fuel supply pump 21 (see Fig. 3, 2.(4)(c)).

Next, when both the fuel oil flowing through the first supply line 16 and the fuel oil flowing through the circulation line 18 have become the complete Bunker C, the first and second fuel density detecting portions 27 and 29 output the density signals indicating so. Then, the determining portion determines that the heavy oil supplied to the diesel engine 12 is Bunker C, and the supply method output portion outputs based on the result of the determination the second emulsion signal indicating that the water should be mixed in the second fuel oil (Bunker C) (see Fig. 3, 2.(4)(d)).

After that, the on-off valve 22 is manually or automatically opened and the water supply pump 23 is driven to supply the water to the mixer 19 (see Fig. 3, 2.(4)(e)). Thus, the supplied fuel can be switched.

Here, on the condition that each of both the first and second fuel density detecting portions 27 and 29 has output the density signal indicating that the fuel oil flowing through the first supply line 16 or the fuel oil flowing through the circulation line 18 is the complete Bunker A (see Fig. 3, 2.(4)(b)), the seventh interlock portion can set such that the supply passage switching portion 20 can be manually or automatically operated to supply Bunker C in the second fuel tank 14 to the fuel supply pump 21 (see Fig. 3, 2.(4)(c)).

Therefore, when at least one of the first and second fuel density detecting portions 27 and 29 does not output the density signal indicating that the fuel oil flowing through the first supply line 16 or the fuel oil flowing through the circulation line 18 is the complete Bunker A (for example, when at least one of the first and second fuel density detecting portions 27 and 29 outputs the density signal indicating that the fuel oil flowing through the first supply line 16 or the fuel oil flowing through the circulation line 18 is not the complete Bunker A), the seventh interlock portion can prohibit Bunker C from being supplied to the diesel engine 12 by the erroneous operation of the operator or the malfunction of a device (for example, prohibit the supply passage switching portion 20 from being operated such that Bunker C in the second fuel tank 14 is supplied to the fuel supply pump 21). With this, unexpected damages on the diesel engine 12 and the fuel supply system can be surely prevented from occurring.

Then, on the condition that each of both the first and second fuel density detecting portions 27 and 29 has output the density signal indicating that the fuel oil flowing through the first supply line 16 or the fuel oil flowing through the circulation line 18 is the complete Bunker C (see Fig. 3, 2.(4)(d)), the eighth interlock portion (second interlock portion) can set such that the on-off valve 22 can be manually or automatically opened and the water supply pump 23 can be manually or automatically driven to supply the water to the mixer 19 (see Fig. 3, 2.(4)(e)).

Therefore, when at least one of the first and second fuel density detecting portions 27 and 29 does not output the density signal indicating that the fuel oil flowing through the first supply line 16 or the fuel oil flowing through the circulation line 18 is the complete Bunker C (for example, when at least one of the first and second fuel density detecting portions 27 and 29 outputs the density signal indicating that the fuel oil flowing through the first supply line 16 or the fuel oil flowing through the circulation line 18 is mixed with the Bunker A emulsion or Bunker A), the eighth interlock portion (second interlock portion) can prohibit the water from being supplied to the diesel engine 12 by the erroneous operation of the operator or the malfunction of a device (for example, prohibit the on-off valve 22 from being opened and the water supply pump 23 from being driven). With this, unexpected damages on the diesel engine 12 and the fuel supply system can be surely prevented from occurring.

In the above embodiments, for example, the density of Bunker A that is the first fuel oil and the density of Bunker C that is the second fuel oil are respectively about 0.87 g/cm³ and about 0.96 g/cm³.

Embodiment 1 shown in Fig. 1 is configured such that when the first fuel density detecting portion 27 has output the density signal indicating that the fuel oil flowing through the first supply line 16 is the complete Bunker C and the second fuel density detecting portion 29 has output the density signal indicating that the fuel oil flowing through the circulation line 18 is the complete Bunker C, the determining portion determines that the heavy oil supplied to the diesel engine 12 is Bunker C. However, Embodiment 1 is may be configured differently.

For example, Embodiment 1 may be configured such that: the first fuel density detecting portion 27 shown in Fig. 1 is omitted; and when the second fuel density detecting portion 29 has output the density signal indicating that the fuel oil flowing through the circulation line 18 is the complete Bunker C, the determining portion determines that the heavy oil supplied to the diesel engine 12 is Bunker C.

In a case where the first fuel density detecting portion 27 is omitted, a lever position detecting portion (a limit switch, an optoelectronic switch, or the like) may be provided, which is configured to detect the operation position of the operating lever for operating the valve of the supply passage switching portion 20. To be specific, based on a position detection signal output from the lever position detecting portion, the determining portion may determine whether the heavy oil supplied through the first supply line 16 to the circulation line 18 is Bunker A or Bunker C.

Further, in the above embodiments, the complete (unmixed) Bunker A denotes that the density of the fuel oil detected by the first fuel density detecting portion 27 falls within a predetermined Bunker A density range, and the complete (unmixed) Bunker C denotes that the density of the fuel oil detected by the second fuel density detecting portion 29 falls within a predetermined Bunker C density range.

### Industrial Applicability

As above, the fuel supply apparatus with the fuel switching function according to the present invention has an excellent effect in which the determining portion determines whether the fuel oil supplied to the diesel engine is the first fuel oil (Bunker A, for example) or the second fuel oil (Bunker C, for example) and an appropriate water-emulsion fuel or fuel can be supplied to the diesel engine based on the result of the determination by the determining portion. For example, the present invention is suitably applicable to the fuel supply apparatus with the fuel switching function included in the ship including the diesel engine.

### Reference Signs List

- 11: fuel supply apparatus with fuel switching function
- 12: diesel engine
- 13: first fuel tank
- 14: second fuel tank
- 15: water tank
- 16: first supply line
- 17: second supply line
- 18: circulation line
- 19: mixer
- 20: supply passage switching portion
- 21: fuel supply pump
- 22: on-off valve
- 23: water supply pump
- 24: fuel circulation pump
- 25, 26: pipe
- 27: first fuel density detecting portion
- 28: controller
- 29: second fuel density detecting portion
- 30: return chamber
- 32: fuel supply apparatus with fuel switching function
- 33: additive tank
- 34: additive supply pump
- 35: on-off valve
- 36, 37: pipe

## Claims

1. A fuel supply apparatus (11) with a fuel switching function, the fuel supply apparatus (11) being configured to switch a supply passage switching portion (20) such that one of first fuel oil and second fuel oil used to produce water-emulsion fuel containing fuel oil and water is supplied to a diesel engine (12), the fuel supply apparatus (11)
**characterized by**
a fuel density detecting portion (29; 27, 29) configured to detect density of the fuel oil supplied to the diesel engine (12);
a determining portion (28) configured to determine, based on the density detected by the fuel density detecting portion (29; 27, 29), whether the fuel oil supplied to the diesel engine (12) is the first fuel oil or the second fuel oil; and
a supply method output portion (28) configured to
when the determining portion (28) has determined that the fuel oil supplied to the diesel engine (12) is the first fuel oil, output a first emulsion signal indicating that the water and an additive should be mixed in the first fuel oil and
when the determining portion (28) has determined that the fuel oil supplied to the diesel engine (12) is the second fuel oil, output a second emulsion signal indicating that the water should be mixed in the second fuel oil.

2. The fuel supply apparatus (11) with the fuel switching function according to claim 1, comprising a first interlock portion (28) configured to set such that the water and the additive are able to be automatically or manually supplied to the first fuel oil, on a condition that the supply method output portion (28) has output the first emulsion signal.

3. The fuel supply apparatus (11) with the fuel switching function according to claim 1, comprising a second interlock portion (28) configured to set such that the water is able to be automatically or manually supplied to the second fuel oil, on a condition that the supply method output portion (28) has output the second emulsion signal.

4. The fuel supply apparatus (11) with the fuel switching function according to any one of claims 1 to 3, the fuel supply apparatus (11) comprising:
a mixer (19) communicating with the diesel engine (12) and supplied with one of the first fuel oil and the second fuel oil through the supply passage switching portion (20);
a water supply portion configured to supply the water to the mixer (19); and
a third interlock portion (28) configured to set such that the water supply portion (23) is able to supply the water, on a condition that the fuel density detecting portion (29; 27, 29) has detected the density of the second fuel oil since the supply passage switching portion (20) has been switched to supply the second fuel oil to the diesel engine (12) when switching from the state where the first fuel not containing the water is being supplied to the diesel engine (12) to the state where the second fuel emulsion containing the second fuel oil and the water is supplied to the diesel engine (12).

5. The fuel supply apparatus (11) with the fuel switching function according to any one of claims 1 to 3, the fuel supply apparatus (11) comprising:
a mixer (19) communicating with the diesel engine (12) and supplied with one of the first fuel oil and the second fuel oil through the supply passage switching portion (20);
a water supply portion (23) configured to supply the water to the mixer (19); and
a fourth interlock portion (28) configured to set such that the supply passage switching portion (20) is able to be switched to supply the first fuel oil to the diesel engine (12), on a condition that the fuel density detecting portion (29; 27, 29) has detected the density of the second fuel oil since the water supply portion (23) has stopped supplying the water when switching from the state where the second fuel emulsion containing the second fuel oil and the water is being supplied to the diesel engine (12) to the state where the first fuel oil is supplied to the diesel engine (12).

6. The fuel supply apparatus (11) with the fuel switching function according to any one of claims 1 to 3, the fuel supply apparatus (11) comprising:
a mixer (19) communicating with the diesel engine (12) and supplied with one of the first fuel oil and the second fuel oil through the supply passage switching portion (20);
a water supply portion (23) configured to supply the water to the mixer (19);
an additive supply portion (34) configured to supply the additive to the mixer (19);
a fifth interlock portion (28) configured to set such that the supply passage switching portion (20) is able to be switched to supply the first fuel oil to the diesel engine (12), on a condition that the fuel density detecting portion (29; 27, 29) has detected the density of the second fuel oil since the water supply portion (23) has stopped supplying the water when switching from the state where the second fuel emulsion containing the second fuel oil and the water is being supplied to the diesel engine (12) to the state where the first fuel emulsion containing the first fuel oil, the water, and the additive is supplied to the diesel engine (12); and
a sixth interlock portion (28) configured to set such that the water supply portion (23) is able to supply the water and the additive supply portion (34) is able to supply the additive, on a condition that the fuel density detecting portion (29; 27, 29) has detected the density of the first fuel oil since the supply passage switching portion (20) has been switched to supply the first fuel oil to the diesel engine (12).

7. The fuel supply apparatus (11) with the fuel switching function according to any one of claims 1 to 3, the fuel supply apparatus (11) comprising:
a mixer (19) communicating with the diesel engine (12) and supplied with one of the first fuel oil and the second fuel oil through the supply passage switching portion (20);
a water supply portion (23) configured to supply the water to the mixer (19);
an additive supply portion (34) configured to supply the additive to the mixer (19);
a fuel density detecting portion (29; 27, 29) configured to detect density of the fuel oil supplied to the diesel engine (12);
a seventh interlock portion (28) configured to set such that the supply passage switching portion (20) is able to be switched to supply the second fuel oil to the diesel engine (12), on a condition that the fuel density detecting portion (29; 27, 29) has detected the density of the first fuel oil since the water supply portion (23) has stopped supplying the water and the additive supply portion (34) has stopped supplying the additive when switching from the state where the first fuel emulsion containing the first fuel oil, the water, and the additive is being supplied to the diesel engine (12) to the state where the second fuel emulsion containing the second fuel oil and the water is supplied to the diesel engine (12); and
an eighth interlock portion (28) configured to set such that the water supply portion (23) is able to supply the water, on a condition that the fuel density detecting portion (29; 27, 29) has detected the density of the second fuel oil since the supply passage switching portion (20) has been switched to supply the second fuel oil to the diesel engine (12).

## Patentansprüche

1. Kraftstoffzufuhrvorrichtung (11) mit Kraftstoffumschaltfunktion, wobei die Kraftstoffzufuhrvorrichtung (11) dazu konfiguriert ist, einen Zufuhrdurchgangsumschaltabschnitt (20) derart zu schalten, dass ein erstes Schweröl oder ein zweites Schweröl, das verwendet wird, um eine Schweröl und Wasser enthaltende Wasser-Kraftstoff-Emulsion zu erzeugen, an einen Dieselmotor (12) zugeführt wird, wobei die Kraftstoffzufuhrvorrichtung (11) **gekennzeichnet ist durch**:
einen Kraftstoffdichte-Erfassungsabschnitt (29; 27, 29), der dazu konfiguriert ist, die Dichte des an den Dieselmotor (12) zugeführten Schweröls zu erfassen;
einen Bestimmungsabschnitt (28), der dazu konfiguriert ist, basierend auf der von dem Kraftstoffdichte-Erfassungsabschnitt (29; 27, 29) erfassten Dichte zu bestimmen, ob es sich bei dem an den Dieselmotor (12) zugeführten Schweröl um das erste Schweröl oder das zweite Schweröl handelt; und
einen Zufuhrverfahren-Ausgabeabschnitt (28), der konfiguriert ist zum:
wenn der Bestimmungsabschnitt (28) bestimmt hat, dass es sich bei dem an den Dieselmotor (12) zugeführten Schweröl um das erste Schweröl handelt, Ausgeben eines ersten Emulsionssignals, das anzeigt, dass das Wasser und ein Additiv in das erste Schweröl gemischt werden sollen, und
wenn der Bestimmungsabschnitt (28) bestimmt hat, dass es sich bei dem an den Dieselmotor (12) zugeführten Schweröl um das zweite Schweröl handelt, Ausgeben eines zweiten Emulsionssignals, das anzeigt, dass das Wasser in das zweite Schweröl gemischt werden soll.

2. Kraftstoffzufuhrvorrichtung (11) mit Kraftstoffumschaltfunktion gemäß Anspruch 1, die einen ersten Verriegelungsabschnitt (28) umfasst, der dazu konfiguriert ist, eine derartige Einstellung vorzunehmen, dass das Wasser und das Additiv automatisch oder manuell an das erste Schweröl zugeführt werden können, unter der Bedingung, dass der Zufuhrverfahren-Ausgabeabschnitt (28) das erste Emulsionssignal ausgegeben hat.

3. Kraftstoffzufuhrvorrichtung (11) mit Kraftstoffumschaltfunktion gemäß Anspruch 1, die einen zweiten Verriegelungsabschnitt (28) umfasst, der dazu konfiguriert ist, eine derartige Einstellung vorzunehmen, dass das Wasser automatisch oder manuell an das zweite Schweröl zugeführt werden können, unter der Bedingung, dass der Zufuhrverfahren-Ausgabeabschnitt (28) das zweite Emulsionssignal ausgegeben hat.

4. Kraftstoffzufuhrvorrichtung (11) mit Kraftstoffumschaltfunktion gemäß einem der Ansprüche 1 bis 3, wobei die Kraftstoffzufuhrvorrichtung (11) umfasst:
eine Mischeinrichtung (19), die mit dem Dieselmotor (12) in Verbindung steht und durch den Zufuhrdurchgangsumschaltabschnitt (20) mit dem ersten Schweröl oder dem zweiten Schweröl versorgt wird;
einen Wasserzufuhrabschnitt, der dazu konfiguriert ist, Wasser an die Mischeinrichtung (19) zuzuführen; und
einen dritten Verriegelungsabschnitt (28), der dazu konfiguriert ist, eine derartige Einstellung vorzunehmen, dass der Wasserzufuhrabschnitt (23) das Wasser zuführen kann, unter der Bedingung, dass der Kraftstoffdichte-Erfassungsabschnitt (29; 27, 29) die Dichte des zweiten Schweröls erfasst hat, seit der Zufuhrdurchgangsumschaltabschnitt (20) dazu geschaltet wurde, um das zweite Schweröl an den Dieselmotor (12) zuzuführen, wenn von dem Zustand, in dem der erste, kein Wasser enthaltende Kraftstoff an den Dieselmotor (12) zugeführt wird, in einen Zustand umgeschaltet wird, in dem die zweite Kraftstoffemulsion, die das zweite Schweröl und das Wasser enthält, an den Dieselmotor (12) zugeführt wird.

5. Kraftstoffzufuhrvorrichtung (11) mit Kraftstoffumschaltfunktion gemäß einem der Ansprüche 1 bis 3, wobei die Kraftstoffzufuhrvorrichtung (11) umfasst:
eine Mischeinrichtung (19), die mit dem Dieselmotor (12) in Verbindung steht und durch den Zufuhrdurchgangsumschaltabschnitt (20) mit dem ersten Schweröl oder dem zweiten Schweröl versorgt wird;
einen Wasserzufuhrabschnitt (23), der dazu konfiguriert ist, Wasser an die Mischeinrichtung (19) zuzuführen; und
einen vierten Verriegelungsabschnitt (28), der dazu konfiguriert ist, eine derartige Einstellung vorzunehmen, dass der Zufuhrdurchgangsumschaltabschnitt (20) dazu geschaltet werden kann, das erste Schweröl an den Dieselmotor (12) zuzuführen, unter der Bedingung, dass der Kraftstoffdichte-Erfassungsabschnitt (29; 27, 29) die Dichte des zweiten Schweröls erfasst hat, seit der Wasserzufuhrabschnitt (23) die Wasserzufuhr gestoppt hat, wenn von dem Zustand, in dem die zweite Kraftstoffemulsion, die das zweite Schweröl und das Wasser enthält, an den Dieselmotor (12) zugeführt wird, in einen Zustand umgeschaltet wird, in dem das erste Schweröl an den Dieselmotor (12) zugeführt wird.

6. Kraftstoffzufuhrvorrichtung (11) mit Kraftstoffumschaltfunktion gemäß einem der Ansprüche 1 bis 3, wobei die Kraftstoffzufuhrvorrichtung (11) umfasst:
eine Mischeinrichtung (19), die mit dem Dieselmotor (12) in Verbindung steht und durch den Zufuhrdurchgangsumschaltabschnitt (20) mit dem ersten Schweröl oder dem zweiten Schweröl versorgt wird;
einen Wasserzufuhrabschnitt (23), der dazu konfiguriert ist, Wasser an die Mischeinrichtung (19) zuzuführen;
einen Additivzufuhrabschnitt (34), der dazu konfiguriert ist, das Additiv an die Mischeinrichtung (19) zuzuführen;
einen fünften Verriegelungsabschnitt (28), der dazu konfiguriert ist, eine derartige Einstellung vorzunehmen, dass der Zufuhrdurchgangsumschaltabschnitt (20) dazu geschaltet werden kann, das erste Schweröl an den Dieselmotor (12) zuzuführen, unter der Bedingung, dass der Kraftstoffdichte-Erfassungsabschnitt (29; 27, 29) die Dichte des zweiten Schweröls erfasst hat, seit der Wasserzufuhrabschnitt (23) die Wasserzufuhr gestoppt hat, wenn von dem Zustand, in dem die zweite Kraftstoffemulsion, die das zweite Schweröl und das Wasser enthält, an den Dieselmotor (12) zugeführt wird, in einen Zustand umgeschaltet wird, in dem die erste Kraftstoffemulsion, die das erste Schweröl, das Wasser und das Additiv enthält, an den Dieselmotor (12) zugeführt wird; und
einen sechsten Verriegelungsabschnitt (28), der dazu konfiguriert ist, eine derartige Einstellung vorzunehmen, dass der Wasserzufuhrabschnitt (23) das Wasser zuführen kann und der Additivzufuhrabschnitt (34) das Additiv zuführen kann, unter der Bedingung, dass der Kraftstoffdichte-Erfassungsabschnitt (29; 27, 29) die Dichte des ersten Schweröls erfasst hat, seit der Zufuhrdurchgangsumschaltabschnitt (20) dazu geschaltet wurde, das erste Schweröl an den Dieselmotor (12) zuzuführen.

7. Kraftstoffzufuhrvorrichtung (11) mit Kraftstoffumschaltfunktion gemäß einem der Ansprüche 1 bis 3, wobei die Kraftstoffzufuhrvorrichtung (11) umfasst:
eine Mischeinrichtung (19), die mit dem Dieselmotor (12) in Verbindung steht und durch den Zufuhrdurchgangsumschaltabschnitt (20) mit dem ersten Schweröl oder dem zweiten Schweröl versorgt wird;
einen Wasserzufuhrabschnitt (23), der dazu konfiguriert ist, Wasser an die Mischeinrichtung (19) zuzuführen;
einen Additivzufuhrabschnitt (34), der dazu konfiguriert ist, das Additiv an die Mischeinrichtung (19) zuzuführen;
einen Kraftstoffdichte-Erfassungsabschnitt (29; 27, 29), der dazu konfiguriert ist, die Dichte des an den Dieselmotor (12) zugeführten Schweröls zu erfassen;
einen siebten Verriegelungsabschnitt (28), der dazu konfiguriert ist, eine derartige Einstellung vorzunehmen, dass der Zufuhrdurchgangsumschaltabschnitt (20) dazu geschaltet werden kann, das zweite Schweröl an den Dieselmotor (12) zuzuführen, unter der Bedingung, dass der Kraftstoffdichte-Erfassungsabschnitt (29; 27, 29) die Dichte des ersten Schweröls erfasst hat, seit der Wasserzufuhrabschnitt (23) die Wasserzufuhr gestoppt hat und der Additivzufuhrabschnitt (34) die Zufuhr des Additivs gestoppt hat, wenn von dem Zustand, in dem die erste Kraftstoffemulsion, die das erste Schweröl, das Wasser und das Additiv enthält, an den Dieselmotor (12) zugeführt wird, in einen Zustand umgeschaltet wird, in dem die zweite Kraftstoffemulsion, die das zweite Schweröl und das Wasser enthält, an den Dieselmotor (12) zugeführt wird; und
einen achten Verriegelungsabschnitt (28), der dazu konfiguriert ist, eine derartige Einstellung vorzunehmen, dass der Wasserzufuhrabschnitt (23) das Wasser zuführen kann, unter der Bedingung, dass der Kraftstoffdichte-Erfassungsabschnitt (29; 27, 29) die Dichte des zweiten Schweröls erfasst hat, seit der Zufuhrdurchgangsumschaltabschnitt (20) dazu geschaltet wurde, das zweite Schweröl an den Dieselmotor (12) zuzuführen.

## Revendications

1. Dispositif d'alimentation en carburant (11) à fonction de commutation de carburant, le dispositif d'alimentation en carburant (11) étant conçu pour enclencher une section de commutation de passage d'alimentation (20) de manière qu'un premier fioul ou un second fioul servant à produire un carburant en émulsion aqueuse contenant du fioul et de l'eau soit fourni à un moteur diesel (12), le dispositif d'alimentation en carburant (11) étant **caractérisé par**
une section de détection de la densité du carburant (29 ; 27, 29) conçue pour détecter la densité du fioul fourni au moteur diesel (12),
une section de détermination (28) conçue pour déterminer, compte tenu de la densité détectée par la section de détection de la densité du carburant (29 ; 27, 29), si le fioul fourni au moteur diesel (12) est le premier fioul ou le second fioul, et
une section de communication de procédé d'alimentation (28) conçue pour :
émettre un premier signal d'émulsion signifiant que l'eau et un additif doivent être mélangés au premier fioul, si la section de détermination (28) a déterminé que le fioul fourni au moteur diesel (12) est le premier fioul, et
émettre un second signal d'émulsion signifiant que l'eau doit être mélangée au second fioul, si la section de détermination (28) a déterminé que le fioul fourni au moteur diesel (12) est le second fioul.

2. Dispositif d'alimentation en carburant (11) à fonction de commutation de carburant selon la revendication 1, comprenant une première section de couplage (28) conçue pour intervenir de manière que l'eau et l'additif puissent être fournis automatiquement ou manuellement au premier fioul, sous réserve que la section de communication de procédé d'alimentation (28) ait émis le premier signal d'émulsion.

3. Dispositif d'alimentation en carburant (11) à fonction de commutation de carburant selon la revendication 1, comprenant une deuxième section de couplage (28) conçue pour intervenir de manière que l'eau puisse être fournie automatiquement ou manuellement au second fioul, sous réserve que la section de communication de procédé d'alimentation (28) ait émis le second signal d'émulsion.

4. Dispositif d'alimentation en carburant (11) à fonction de commutation de carburant selon l'une quelconque des revendications 1 à 3, le dispositif d'alimentation en carburant (11) comprenant :
un mélangeur (19) en communication avec le moteur diesel (12) et recevant le premier ou le second fioul par le biais de la section de commutation de passage d'alimentation (20),
une section d'alimentation en eau conçue pour fournir l'eau au mélangeur (19), et
une troisième section de couplage (28) conçue pour intervenir de manière que la section d'alimentation en eau (23) puisse apporter l'eau, sous réserve que la section de détection de la densité du carburant (29 ; 27, 29) ait détecté la densité du second fioul à compter de l'enclenchement de la section de commutation de passage d'alimentation (20) afin d'apporter le second fioul au moteur diesel (12), lors du passage d'un état dans lequel le premier carburant exempt d'eau est fourni au moteur diesel (12) à un état dans lequel la seconde émulsion de carburant contenant le second fioul et l'eau est fournie au moteur diesel (12).

5. Dispositif d'alimentation en carburant (11) à fonction de commutation de carburant selon l'une quelconque des revendications 1 à 3, le dispositif d'alimentation en carburant (11) comprenant :
un mélangeur (19) en communication avec le moteur diesel (12) et recevant le premier ou le second fioul par le biais de la section de commutation de passage d'alimentation (20),
une section d'alimentation en eau (23) conçue pour apporter l'eau au mélangeur (19), et
une quatrième section de couplage (28) conçue pour intervenir de manière que la section de commutation de passage d'alimentation (20) puisse être enclenchée afin d'apporter le premier fioul au moteur diesel (12), sous réserve que la section de détection de la densité du carburant (29 ; 27, 29) ait détecté la densité du second fioul à compter de l'arrêt de l'apport d'eau par la section d'alimentation en eau (23), lors du passage d'un état dans lequel la seconde émulsion de carburant contenant le second fioul et l'eau est fournie au moteur diesel (12) à un état dans lequel le premier fioul est fourni au moteur diesel (12).

6. Dispositif d'alimentation en carburant (11) à fonction de commutation de carburant selon l'une quelconque des revendications 1 à 3, le dispositif d'alimentation en carburant (11) comprenant :
un mélangeur (19) en communication avec le moteur diesel (12) et recevant le premier ou le second fioul par le biais de la section de commutation de passage d'alimentation (20),
une section d'alimentation en eau (23) conçue pour apporter l'eau au mélangeur (19),
une section d'alimentation en additif (34) conçue pour apporter l'additif au mélangeur (19),
une cinquième section de couplage (28) conçue pour intervenir de manière que la section de commutation de passage d'alimentation (20) puisse être enclenchée afin d'apporter le premier fioul au moteur diesel (12), sous réserve que la section de détection de la densité du carburant (29 ; 27, 29) ait détecté la densité du second fioul à compter de l'arrêt de l'apport d'eau par la section d'alimentation en eau (23), lors du passage d'un état dans lequel la seconde émulsion de carburant contenant le second fioul et l'eau est fournie au moteur diesel (12) à un état dans lequel la première émulsion de carburant contenant le premier fioul, l'eau et l'additif est fournie au moteur diesel (12), et
une sixième section de couplage (28) conçue pour intervenir de manière que la section d'alimentation en eau (23) puisse apporter l'eau et que la section d'alimentation en additif (34) puisse apporter l'additif, sous réserve que la section de détection de la densité du carburant (29 ; 27, 29) ait détecté la densité du premier fioul à compter de l'enclenchement de la section de commutation de passage d'alimentation (20) afin d'apporter le premier fioul au moteur diesel (12).

7. Dispositif d'alimentation en carburant (11) à fonction de commutation de carburant selon l'une quelconque des revendications 1 à 3, le dispositif d'alimentation en carburant (11) comprenant :
un mélangeur (19) en communication avec le moteur diesel (12) et recevant le premier ou le second fioul par le biais de la section de commutation de passage d'alimentation (20),
une section d'alimentation en eau (23) conçue pour apporter l'eau au mélangeur (19),
une section d'alimentation en additif (34) conçue pour apporter l'additif au mélangeur (19),
une section de détection de la densité du carburant (29 ; 27, 29) conçue pour détecter la densité du fioul fourni au moteur diesel (12),
une septième section de couplage (28) conçue pour intervenir de manière que la section de commutation de passage d'alimentation (20) puisse être enclenchée afin d'apporter le second fioul au moteur diesel (12), sous réserve que la section de détection de la densité du carburant (29 ; 27, 29) ait détecté la densité du premier fioul à compter de l'arrêt de l'apport d'eau par la section d'alimentation en eau (23) et de l'arrêt de l'apport d'additif par la section d'alimentation en additif (34), lors du passage d'un état dans lequel la première émulsion de carburant contenant le premier fioul, l'eau et l'additif est fournie au moteur diesel (12) à un état dans lequel la seconde émulsion de carburant contenant le second fuel et l'eau est fournie au moteur diesel (12), et
une huitième section de couplage (28) conçue pour intervenir de manière que la section d'alimentation en eau (23) puisse apporter l'eau, sous réserve que la section de détection de la densité du carburant (29 ; 27, 29) ait détecté la densité du second fioul à compter de l'enclenchement de la section de commutation de passage d'alimentation (20) afin d'apporter le second fioul au moteur diesel (12).
